**Europäisches Patentamt**

**European Patent Office**

**Office européen des brevets**

(19)

(11) **EP 1 466 531 A1**

(12) **EUROPEAN PATENT APPLICATION**

(43) Date of publication:
**13.10.2004 Bulletin 2004/42**

(51) Int Cl.⁷: **A23F 5/24**, A23L 3/01,
A23L 3/32

(21) Application number: **04007915.4**

(22) Date of filing: **01.04.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(30) Priority: **03.04.2003 JP 2003100641**<br><br>(71) Applicant: **Mayatec Co., Ltd.**<br>**Kobe-shi, Hyogo 650-0024 (JP)** | (72) Inventor: **Godai, Tomoyuki**<br>**Kobe-shi, Hyogo 650-0024 (JP)**<br><br>(74) Representative:<br>**Patentanwälte Maxton & Langmaack**<br>**Postfach 51 08 06**<br>**50944 Köln (DE)** |

(54) **Method for suppressing oxidization of an object and alternating current voltage application apparatus**

(57)     An alternating current voltage application apparatus of the present invention includes a treatment chamber (2) having a wall part of conductive member for accommodating a target (6); an electrode (3) provided in the treatment chamber for applying a voltage to the target; and an alternating current power source (7) in which one output terminal and the other output terminal are connected to the treatment chamber and the electrode, respectively. This alternating current voltage application apparatus applies to a target an alternating current voltage of 10V or more and 5kV or less such that current of 1µA or more and 1000mA or less flows.

The apparatus is used in a method for suppressing oxidization of an object, e.g. coffee.

FIG. 1

EP 1 466 531 A1

## Description

BACKGROUND OF THE INVENTION

### 1. Field of the Invention

The present invention relates to a method for suppressing the oxidization of an object and an alternating current voltage application apparatus. In particular, the present invention relates to a method and an apparatus for applying an alternating current voltage to a target such that a weak current flows in the target.

### 2. Description of the Related Art

Generally, one of the causes of the degradation of an object is the oxidization of the object. For example, a coffee shop or the like provides services (e.g., provision of coffee) depending on an order from a customer. Such a coffee shop generally does not make coffee after receiving an order but previously makes a large amount of coffee to store the prepared coffee in a coffee warmer. However, keeping the coffee in the coffee warmer in this way causes the taste of the coffee to be worse as time passes. This is because of the fact that coffee tends to be badly oxidized when being subjected to air and the oxidization causes the taste of coffee to be worse.

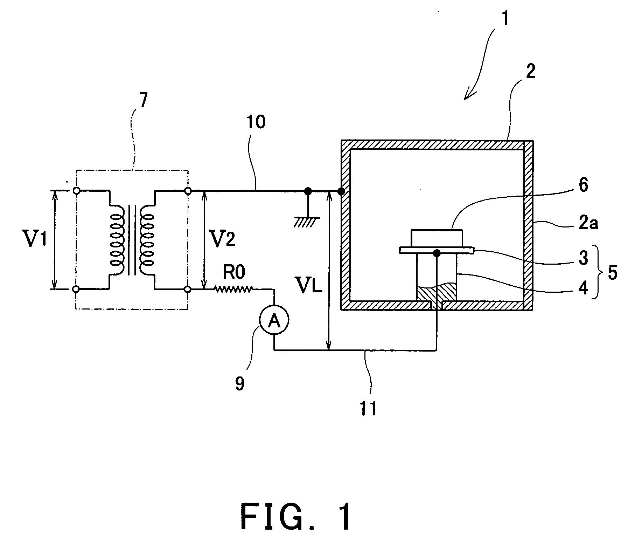

Conventional methods for suppressing such oxidization of an object include a method for suppressing the oxidization of coffee by applying a high voltage to the coffee (e.g., Japanese Laid-Open Publication No. 2000-358954 (see Figure 1 to Figure 3).

However, in this conventional method, the optimal conditions for suppressing the oxidization are not necessarily clear.

SUMMARY OF THE INVENTION

It is an object of the present invention to provide an improved method for suppressing the oxidization of an object and an alternating current voltage application apparatus.

In order to achieve the above objective, a method for suppressing oxidization of an object according to the present invention, comprising applying alternating current voltage of 10V or more and 5kV or less to an object such that current of 1μA or more and 1000mA or less flows to thereby suppress the oxidization of the object.

Such a structure preferably suppresses the oxidization of the object by the application of the alternating current potential.

The alternating current voltage is preferably 100V or more and 5kV or less. The current is preferably 10μA or more and 100mA or less. The oxidization of an object under such conditions is suppressed in a more preferable manner.

The alternating current voltage application apparatus according to the present invention includes a treatment chamber for accommodating a target, the chamber having a wall part comprised of a conductive member; an electrode provided in the treatment chamber for applying a voltage to the target; and an alternating current power source having one output terminal connected to the treatment chamber and the other output terminal connected to the electrode. Such a structure allows an output terminal opposite to the one for applying a voltage to the target to be connected to the treatment chamber accommodating the target. Therefore, this provides a smaller load impedance as compared to a case where the output terminal is opened, thus reducing the output voltage of the alternating current power source.

The above and further objects and features of the invention will more fully be apparent from the following detailed description with accompanying drawings.

BRIEF DESCRIPTION OF THE DRAWINGS

Figure 1 is a schematic view illustrating the structure of an alternating current voltage application apparatus according to an embodiment of the present invention.
Figure 2 is a schematic view illustrating the principle of a method for suppressing the oxidization of an object according to an embodiment of the present invention.
Figure 3 is a schematic view illustrating a method for suppressing oxidization according to an example of the present invention.
Figure 4 is a table illustrating the comparison of the effect of suppressing the oxidization of coffee between an embodiment of the present invention and a conventional example.

DETAILED DESCRIPTION OF THE PREFERRED EMBODIMENTS

Hereinafter, embodiments of the present invention will be described with reference to the drawings.

Embodiments

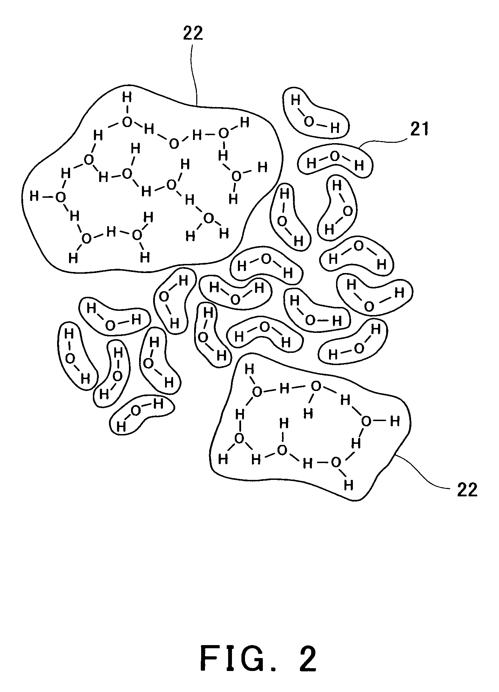

Figure 1 is a schematic view illustrating the structure of an alternating current voltage application apparatus according to an embodiment of the present invention. Figure 2 is a schematic view illustrating the principle of a method for suppressing the oxidization of an object according to the present embodiment.

As shown in Figure 1, this alternating current voltage application apparatus 1 has a treatment chamber 2. The treatment chamber 2 has a box-like shape and the wall part is made of conductive material. The treatment chamber 2 has, at a part of the wall part, a door 2a through which an object to be treated (hereinafter referred to as target) 6 is put in and taken out. The treatment chamber 2 has therein a holder 5. The holder 5 has a support member 4 that is made of electrical insulating material, for example, and is vertically provided at the bottom face of the treatment chamber 2 and a table (electrode) 3 that is provided at the tip end of the support member 4 and is made of conductive material. The target 6 is placed on the table 3. In the present specification, the object 6 may be solid, liquid, or gaseous matter. Specifically, the object 6 may be fine particles, granular matter, fluid matter, and amorphous material. Fluid object is treated while being stored in a conductive container. The alternating current voltage application apparatus 1 also has a transformer 7. The transformer 7 has a pair of secondary terminals one of which is connected through a wiring 10 to the wall part of the treatment chamber 2 and is grounded. In this way, the present embodiment allows an output terminal opposite to the one for applying a voltage to the target 6 to be connected to the treatment chamber 2 accommodating the target. This provides a smaller load impedance as compared to a case where the output terminal is opened, thus reducing the output voltage of the transformer 7. The other of the pair of secondary terminals of the transformer 7 is connected to the table 3 of the holder 5 of the treatment chamber 2 through a wiring 11 having a safety resistance R0 and an ammeter 9. The wiring 11 is appropriately electrically insulated from the wall part of the treatment chamber 2. A voltage operation part (not shown) can be used to adjust a primary voltage V1, thereby adjusting a load voltage VL applied to the target 6.

Next, the operation of the alternating current voltage application apparatus structured as described above (method for suppressing the oxidization of an object) will be described.

First, the door 2a of the treatment chamber 2 is opened to place the target 6 on the table 3 of the holder 5 and then the treatment chamber 2 is closed.

Next, the primary voltage V 1 is applied between a pair of primary terminals of the transformer 7. Herein, this primary voltage V1 is an alternating current voltage of a commercial frequency having a sinusoidal wave. Then, the secondary voltage V2 is induced between the secondary terminals of the transformer 7. Then, a load voltage VL obtained by deducting a voltage drop due to the safety resistance R0 and the ammeter 9 from this secondary voltage V2 is applied between the target 6 (i.e., table 3 to be precise) and the treatment chamber 2. The target 6 and the treatment chamber 2 are insulated from each other by the support member 4 and air in the treatment chamber 2. This causes a load current depending on the load impedance between the target 6 and the treatment chamber 2 (leak resistance or capacity) to be flowed to the transformer 7's secondary circuit and then to the target 6. This load current is a very weak current because the load impedance between the target 6 and the treatment chamber 2 is very large. Thus, this weak load current suppresses the oxidization of the target 6. The load voltage VL is preferably 10V or more and 5kV or less and, more preferably, is 100V or more and 5kV or less. The load current is preferably 1μA or more and 1000mA or less and, more preferably is 10μA or more and 100mA or less. The reason is that experience shows that these conditions provide the above-described action of suppressing the oxidization in an effective manner.

Next, this action of suppressing the oxidization will be described.

With reference to Figure 2, positive and negative potentials are alternately applied to an object with a fixed cycle. The reduction of oxidization requires the following three main conditions "A" to "C" (condition "A": a molecule losing oxygen, condition "B": a molecule having chemical combination with hydrogen, and condition "C": a molecule receiving an electron). The application of positive and negative potentials allows the condition "C" of "a molecule receiving an electron" among these three conditions to be satisfied, therefore the molecule of the condition "B" has chemical combination with hydrogen in an easier manner.

The above conditions will be described by taking an example of water. Water molecules $H_2O$ (shown by reference numeral 21) do not remain stationary but move intensely by binding with one another or by moving away from one another. The group of bound water molecules $H_2O$ is called a cluster 22. Furthermore, the water molecules $H_2O$ do not move in a bound state but repeat dissociation to and bonding of hydrogen ion $H^+$ and hydroxide ion OH- in water. This status can be represented by the chemical equilibrium formula as shown below.

$$H_2O \rightarrow H^+ + OH^-$$

In other words, the water molecules $H_2O$ and hydrogen ion $H^+$ and hydroxide ion $OH^-$ maintain equilibrium therebetween. The existence of hydroxide ion OH- is inconvenient for our daily life because this existence of hydroxide ion $OH^-$ causes an oxidization action in which metal in water has rust or a living body includes lipid peroxide (lipid). However, by alternate application to water of positive and negative potentials with a fixed cycle, hydrogen ion $H^+$ and hydroxide ion OH- respectively hydration-binds with water molecules to be converted into $H_3O^+$(hydronium ion) and $H_3O_2$ (hydroxyl ion). This can be represented by the chemical equilibrium formula as shown below.

$$H_2O + OH^- \rightarrow H_3O_2^-$$

$$2(H_2O) \rightarrow OH^- + H_3O^+$$

In contrast to hydroxide ion OH-, they have a characteristic of causing a mild reduction action. Although the above section described this action of suppressing oxidization by taking an example of water, this action is also generated in general objects. However, it is not clear whether the action of suppressing oxidization is generated in water included in an object or the action is generated in substance composing the object itself. However, it has been demonstrated that supplying alternating current electricity to a general object under conditions of predetermined voltage and current can suppress the oxidization of the object.

(Example)

The present example will describe an example in which the method for suppressing oxidization according to the present embodiment is applied to coffee.

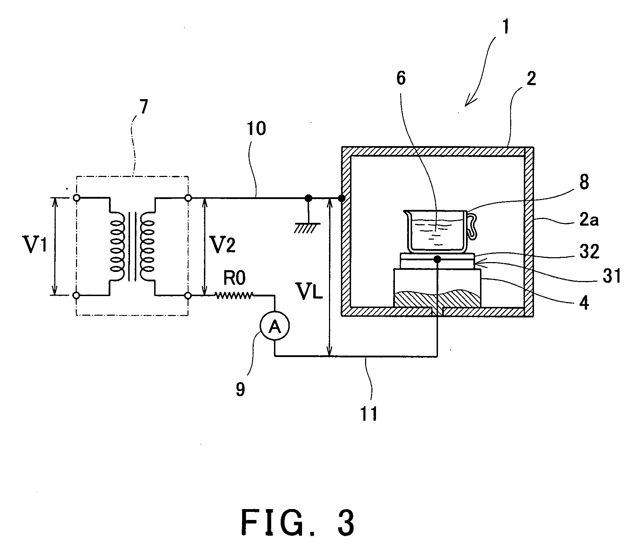

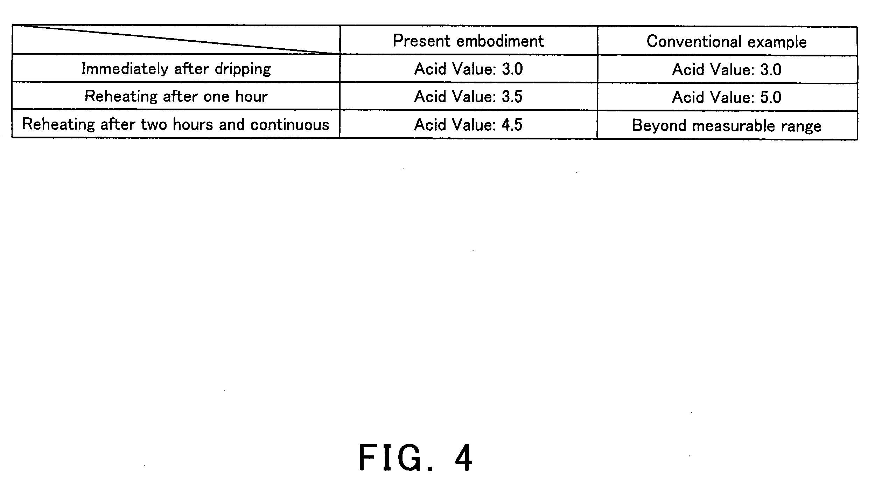

Figure 3 is a schematic view illustrating the method for suppressing oxidization according to the present embodiment. Figure 4 is a table illustrating the comparison of the effect of suppressing oxidization of coffee between the present embodiment and a conventional example.

As shown in Figure 3, the target 6 in the present embodiment is the coffee that has been made. The coffee 6 is in a cup 8 made of a conductive material. The table 3 of Figure 1 is substituted by a coffee warmer 31 provided on the support member 4. The coffee warmer 31 has therein a heater (not shown) heated by current and has on the top face thereof a conductive heating plate 32 on which the cup 8 filled with the coffee 6 is placed. Heat generated by the heater is transmitted through the heating plate 32 and the cup 8 to the coffee 6. The heating plate 32 is also connected through the wiring 11 to the transformer 7's secondary terminal.

In the present example, the change in Acid Value (AV) of the prepared coffee was measured. The coffee was prepared such that the coffee was warmed by a coffee warmer (in which the heating plate 32 is not connected to the transformer 7) and the coffee warmer 31 according to the present example.

The coffee 6 was prepared by dripping special blend coffee made by KEY COFFEE through a paper filter. Water used for the coffee was normal tap water brought to a full boil by a gas cocking stove.

Acid Value of the coffee was measured by an AV Check litmus paper (made by AJINOMOTO). This litmus paper is used to detect Acid Value by the change of the color. The load voltage VL in the measurement was 100V to 5kV, the load current had a value appropriately selected from the range of 10μA to 100mA.

As shown in Figure 4, Acid Values immediately after the coffee dripping of both of the conventional example and the present embodiment were 3.0. However, with regards to Acid Value of the coffee reheated when one hour has passed since the coffee dripping, the conventional example showed an increased Acid Value of 5.0 (which clearly shows the oxidization of coffee 11) while the present embodiment showed Acid Value of 3.5 (which shows a very little increase in the oxidization).

When the coffee was reheated when two hours have passed since the coffee dripping, the conventional example showed an increase in Acid Value beyond a measurable range while the present embodiment showed Acid Value of 4.5 (which is a very little increase from the previous value).

In this experiment, the coffee was reheated after being left unwarmed for a predetermined time after the coffee dripping. The reason is that reheating the coffee that has been once subjected to natural cooling in this manner promotes the oxidization faster than the case in which the coffee is continuously warmed immediately after the coffee dripping, which is suitable for the present embodiment to show the effect of suppressing the increase in Acid Value.

In this way, the present example supplies alternating current electricity to the dripped coffee 6 under the conditions of predetermined voltage and current. This effectively suppresses the oxidization of the coffee 6 to allow the coffee 6 to be maintained with a longer preservation of quality.

Although the above embodiment used the transformer 7 as an alternating current power source, other alternating current power source also may be used so long as desired alternating current voltage and alternating current can be supplied.

Numerous modifications and alternative embodiments of the invention will be apparent to those skilled in the art in the light of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention.

**Claims**

1. A method for suppressing oxidization of an object, comprising applying alternating current voltage of 10V or more and 5kV or less to an object such that current of 1μA or more and 1000mA or less flows to thereby suppress the oxidization of the object.

2. The method according to claim 1, wherein the alternating current voltage is 100V or more and 5kV or less.

3. The method according to claim 1, wherein the current is 10μA or more and 100mA or less.

**4.** An alternating current voltage application apparatus, comprising:

a treatment chamber for accommodating a target, the chamber having a wall part comprised of a conductive member;
an electrode provided in the treatment chamber for applying a voltage to the target; and
an alternating current power source having one output terminal connected to the treatment chamber and the other output terminal connected to the electrode.

FIG. 1

FIG. 2

FIG. 3

|  | Present embodiment | Conventional example |
|---|---|---|
| Immediately after dripping | Acid Value: 3.0 | Acid Value: 3.0 |
| Reheating after one hour | Acid Value: 3.5 | Acid Value: 5.0 |
| Reheating after two hours and continuous | Acid Value: 4.5 | Beyond measurable range |

FIG. 4

**European Patent Office**

# EUROPEAN SEARCH REPORT

Application Number

EP 04 00 7915

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | PATENT ABSTRACTS OF JAPAN vol. 2002, no. 10, 10 October 2002 (2002-10-10) -& JP 2002 159264 A (SANTETSU ENGINEERING INC), 4 June 2002 (2002-06-04) * abstract * | 1-3 | A23F5/24 A23L3/01 A23L3/32 A23L1/25 |
| X | PATENT ABSTRACTS OF JAPAN vol. 2003, no. 07, 3 July 2003 (2003-07-03) -& JP 2003 061570 A (OTA TOSHIKATSU), 4 March 2003 (2003-03-04) * abstract * | 4 | |
| P,X | DATABASE WPI Section Ch, Week 200380 Derwent Publications Ltd., London, GB; Class D13, AN 2003-857364 XP002281330 -& JP 2003 259819 A (AI FLAVOURING KK) 16 September 2003 (2003-09-16) * abstract; figures * | 4 | |
| A | PATENT ABSTRACTS OF JAPAN vol. 1996, no. 03, 29 March 1996 (1996-03-29) & JP 7 289232 A (HIDEO HAYAKAWA; others: 01), 7 November 1995 (1995-11-07) * abstract * | 1-4 | TECHNICAL FIELDS SEARCHED (Int.Cl.7) A23L A23F |
| A | GB 651 265 A (EUGENE JOEL RIVOCHE) 14 March 1951 (1951-03-14) * the whole document * | 1-4 | |

-/--

The present search report has been drawn up for all claims

| Place of search | Date of completion of the search | Examiner |
|---|---|---|
| The Hague | 7 June 2004 | Koch, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 04 00 7915

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN<br>vol. 1999, no. 11,<br>30 September 1999 (1999-09-30)<br>& JP 11 155540 A (SANDEN CORP),<br>15 June 1999 (1999-06-15)<br>* abstract *<br>----- | 1-4 | |
| | | | TECHNICAL FIELDS SEARCHED (Int.Cl.7) |

The present search report has been drawn up for all claims

| Place of search | Date of completion of the search | Examiner |
|---|---|---|
| The Hague | 7 June 2004 | Koch, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 
& : member of the same patent family, corresponding
   document

EPO FORM 1503 03.82 (P04C01)

**EP 1 466 531 A1**

## ANNEX TO THE EUROPEAN SEARCH REPORT
## ON EUROPEAN PATENT APPLICATION NO.

EP 04 00 7915

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2004

| Patent document cited in search report | | Publication date | Patent family member(s) | Publication date |
|---|---|---|---|---|
| JP 2002159264 | A | 04-06-2002 | NONE | |
| JP 2003061570 | A | 04-03-2003 | NONE | |
| JP 2003259819 | A | 16-09-2003 | NONE | |
| JP 7289232 | A | 07-11-1995 | NONE | |
| GB 651265 | A | 14-03-1951 | NONE | |
| JP 11155540 | A | 15-06-1999 | NONE | |

EPO FORM P0459

For more details about this annex : see Official Journal of the European Patent Office, No. 12/82